# EUROPEAN PATENT APPLICATION

(11) **EP 4 682 660 A1**
(43) Date of publication of application: **21.01.2026**
(21) Application number: 25187803.9
(22) Date of filing: 07.07.2025
(51) Int. Cl.: G05B 23/02

(54) **A METHOD FOR LABELING DATA OF ELECTROMECHANICAL DEVICES AND AN APPARATUS THEREOF**

(30) Priority: 18.07.2024 IN 202441055026
(71) Applicant: ABB SCHWEIZ AG, 5400 Baden (CH)
(72) Inventor: KUMARI, Sonal, 560037 Bengaluru (IN); AYDIN, Ugur, 02330 Espoo (FI)
(74) Representative: Zimmermann & Partner Patentanwälte mbB

(57) **Abstract**

A method and an apparatus (104) for labeling data of electromechanical devices is disclosed. The method includes obtaining fault reporting event present in data associated with an electromechanical device. The fault reporting event comprises first timestamp associated with fault of electromechanical device. The method includes estimating second timestamp prior to first timestamp based on domain knowledge of electromechanical device. Data in the time window formed between first timestamp and second timestamp are labeled as unhealthy. The method includes iteratively increasing size of time window by updating second timestamp. The method includes determining an evaluation metric of classifier (212) in classifying data as unhealthy and healthy for each iteration. The method includes determining value of second timestamp associated with optimal evaluation metric. The method includes labeling data in time window formed between first timestamp and updated second timestamp as unhealthy data.

## Description

### TECHNICAL FIELD

The present disclosure relates to data labeling. More particularly, the present disclosure relates to labeling data of electromechanical devices.

### BACKGROUND

A classifier automatically orders or categorizes data into one or more of a set of classes. In an industrial system, the classifier is used to label data relating to an asset such as an electromechanical device as healthy and unhealthy. The data with labels are then provided for training prediction models to predict faults, detect anomaly, perform root-cause analysis, predict aging/remaining useful life, and the like.

In the application of the prediction models to predict faults, simulations and various tests are performed to generate faulty data for labeling. However, such data does not accurately represent the data from the field. Due to this, the prediction models developed on such data do not provide accurate predictions. Also, this requires a huge amount of manual effort, is time consuming, expensive, and not scalable.

The data may be labeled using logged service events and reports. In such a case, the data is labeled based on reporting of the fault event and not on occurrence of the fault. This leads to mislabeling of the data, when there is a delay in reporting the fault event. The training of the prediction models is inaccurate due to mislabeled data or partially labeled data.

The information disclosed in this background of the disclosure section is only for enhancement of understanding of the general background of the invention and should not be taken as an acknowledgement or any form of suggestion that this information forms the prior art already known to a person skilled in the art.

### SUMMARY

The foregoing summary is illustrative only and is not intended to be in any way limiting. In addition to the illustrative aspects, embodiments, and features described above, further aspects, embodiments, and features will become apparent by reference to the drawings and the following detailed description.

In an embodiment, a method for labeling data of electromechanical devices is disclosed. The method includes obtaining, by a processor, a fault reporting event present in data associated with an electromechanical device. The fault reporting event comprises a first timestamp associated with a fault of the electromechanical device. The method includes estimating, by the processor, a second timestamp prior to the first timestamp based on domain knowledge associated with the electromechanical device. The data in a time window formed between the first timestamp and the second timestamp are labeled as unhealthy. The method includes iteratively increasing, by the processor, a size of the time window by updating the second timestamp and selecting the data in the time window for labeling the data. The method includes determining, by the processor, an evaluation metric of the classifier in classifying the data as unhealthy and healthy for each iteration. The method includes determining, by the processor, a value of the second timestamp associated with an optimal evaluation metric, wherein the optimal evaluation metric is determined by comparing the evaluation metric in a current iteration with an evaluation metric in the previous iteration. The method includes labeling, by the processor, the data in the time window formed between the first timestamp and updated second timestamp as unhealthy data.

In an embodiment, an apparatus for labeling data of electromechanical devices is disclosed. The apparatus includes a memory that stores processor-executable instructions. The apparatus includes a processor configured to execute the processor-executable instructions stored in the memory and thereby configured to obtain a fault reporting event in data associated with an electromechanical device. The fault reporting event comprises a first timestamp associated with a fault of the electromechanical device. The processor is configured to estimate a second timestamp prior to the first timestamp based on domain knowledge associated with the electromechanical device. The data in a time window formed between the first timestamp and the second timestamp are labeled as unhealthy. The processor is configured to iteratively increase the size of the time window by updating the second timestamp and selecting the data in the time window for labeling the data. The processor is configured to determine an evaluation metric of the classifier in classifying the data as unhealthy and healthy for each iteration. The processor is configured to determine a value of the second timestamp associated with an optimal evaluation metric, wherein the optimal evaluation metric is determined by comparing the evaluation metric in a current iteration with an evaluation metric in the previous iteration. The processor is configured to label the data in the time window formed between the first timestamp and updated second timestamp as unhealthy data.

In an embodiment, a method for labeling data of electromechanical devices is disclosed. The method includes obtaining, by a processor, a fault reporting event present in data associated with an electromechanical device. The fault reporting event comprising a first timestamp associated with a fault of the electromechanical device. The method includes estimating, by the processor, a second timestamp prior to the first timestamp based on domain knowledge associated with the electromechanical device. The data in a time window formed between the first timestamp and the second timestamp are labeled as unhealthy. The method includes iteratively performing the following steps for labeling the data: (1) sliding, by the processor, the time window by a predetermined size, (2) updating, by the processor, the second timestamp, and (3) selecting, by the processor, the data in the time window. The method includes determining, by the processor, an evaluation metric of the classifier in classifying the data as unhealthy and healthy for each iteration. The method includes determining, by the processor, a value of the second timestamp associated with an optimal evaluation metric, wherein the optimal evaluation metric is determined by comparing the evaluation metric in a current iteration with an evaluation metric in the previous iteration. The method includes labeling, by the processor, the data in the time window formed between the first timestamp and updated second timestamp as unhealthy data.

### BRIEF DESCRIPTION OF THE DRAWINGS

The accompanying drawings, which are incorporated in and constitute a part of this disclosure, illustrate exemplary embodiments and, together with the description, serve to explain the disclosed principles. The same numbers are used throughout the figures to reference features and components. Some embodiments of at least one of device and methods in accordance with embodiments of the present subject matter are now described, by way of example only, and with reference to the accompanying figures, in which:
Fig. 1 illustrates an environment in which some embodiments of the present disclosure may be practiced;
Fig. 2 illustrates an apparatus for labeling data of electromechanical devices, in accordance with an embodiment of the present disclosure;
Fig. 3 illustrates a flow chart of a method for labeling data of electromechanical devices, in accordance with an embodiment of the present disclosure;
Fig. 4a illustrates an exemplary illustration of labeling data in a time window, in accordance with an embodiment of the present disclosure;
Fig. 4b illustrates an exemplary illustration of labeling data in a time window, in accordance with another embodiment of the present disclosure;
Fig. 4c illustrates an exemplary illustration of labeling data in a time window, in accordance with yet another embodiment of the present disclosure;
Fig. 5 illustrates an exemplary method for labeling data of electromechanical devices, in accordance with an embodiment of the present disclosure;
Fig. 6 illustrates an exemplary method for labeling data of electromechanical devices, in accordance with another embodiment of the present disclosure;
Fig. 7a illustrates selecting the data in the time window, in accordance with an embodiment of the present disclosure;
Fig. 7b illustrates selecting the data in the time window, in accordance with another embodiment of the present disclosure; and
Fig. 8 illustrates a block diagram of an exemplary computer system for labeling data of electromechanical devices, in accordance with some embodiments of the present disclosure.

The figures depict embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprises", "comprising", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a device or system or apparatus proceeded by "comprises... a" does not, without more constraints, preclude the existence of other elements or additional elements in the device, system, or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The term "classifiers" used herein refers to a model that is trained on a set of data to recognize certain patterns and/or make certain decisions without further human intervention. A classifier is an algorithm that automatically orders or categorizes data into one or more of a set of classes. In an example, the classifier may be used to classify data as healthy and/or unhealthy, wherein 'healthy' and 'unhealthy' are the classes.

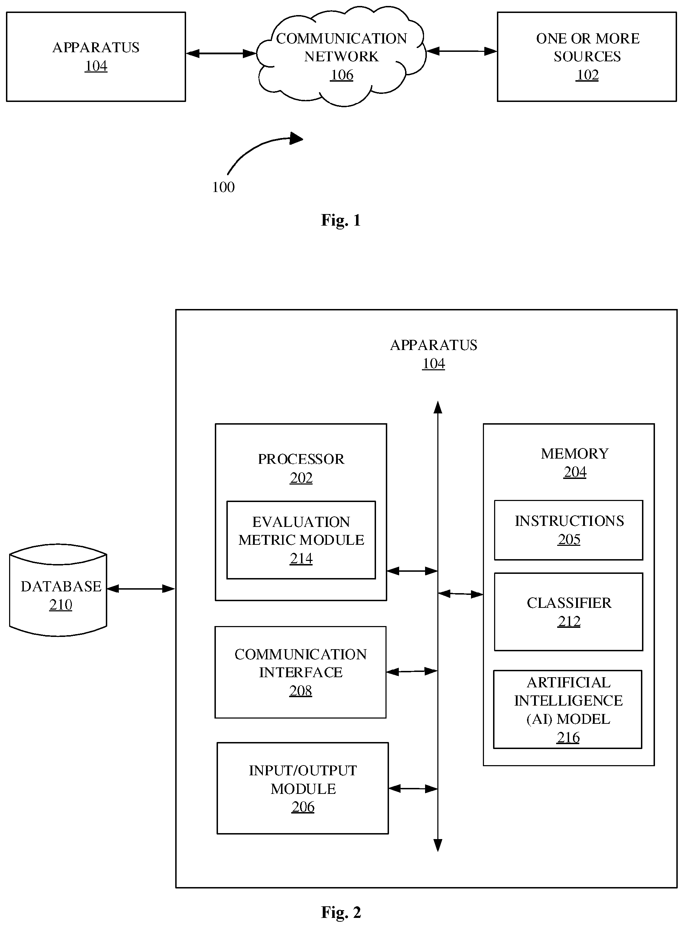

Various embodiments of the present disclosure are hereinafter explained with reference to Figs. 1-8.

Fig. 1 illustrates an environment 100 in which some embodiments of the present disclosure may be practiced. The environment 100 exemplarily depicts one or more sources 102, an apparatus 104 and a communication network 106. The one or more sources 102 may include, but not limited to, a database, a user or an operator, a field device, and the like. The database may comprise information related to fault events. For instance, the database may include logs of service events and reports associated with the field device.

In an embodiment, when a fault event occurs in any filed device for e.g., an electromechanical device, the fault event is reported. However, there may be a delay in reporting the fault event. The reporting of the fault event may not indicate the beginning of a fault of the electromechanical device. The reporting of the fault event is called a fault reporting event. The fault event may be a complete failure of the electromechanical device or failure in a component associated with the electromechanical device. In order to prevent the fault event, it is important to determine the beginning of the fault. A fault prediction model is trained using data relating to the fault reporting event. The input to the fault prediction model is labeled data. The fault prediction model is a classifier used to classify the faults. The data associated with the fault reporting event is labeled as unhealthy and rest of the data is labeled as healthy. However, the data from the beginning of the fault till the fault reporting event is labeled as healthy. As the reporting of the fault event is after the occurrence of the actual fault, there is an error in labeling the data provided to the classifier 212.

For example, consider the reporting of the fault event i.e., fault reporting event occurs on 15 March 2024. However, the beginning of the fault is on 10 March 2024 occurrence. Hence, the data on 15 March 2024 is considered for labeling as unhealthy. However, the data between 10 March 2024 to 15 March 2024 is unhealthy.

The embodiments of the present description are explained with respect to labeling of data related to the electromechanical device.

In an embodiment, the apparatus 104 is deployed for labeling the data accurately. The apparatus 104 labels the data by obtaining a fault reporting event of the electromechanical device. The fault reporting event may be obtained from the one or more sources 102 via a communication network 106 as shown in Fig. 1. The communication network 106 may be a wired network, a wireless network, or a combination of wired and wireless networks. Some non-limiting examples of the wired networks may include the Ethernet, the Local Area Network (LAN), a fiber-optic network, and the like. Some non-limiting examples of the wireless networks may include the Wireless LAN (WLAN), cellular networks, Bluetooth or ZigBee networks, and the like. An example of the communication network 106 is the Internet. In another embodiment, the apparatus 104 may be internally coupled to the one or more sources 102 to receive the fault reporting event.

The operations performed by the apparatus 104 are explained in detail next with reference to Fig. 2.

FIG. 2 illustrates the apparatus 104 for labeling data of electromechanical devices, in accordance with an embodiment of the present disclosure.

The apparatus 104 is depicted to include a processor 202, a memory 204, an Input/Output (I/O) module 206, and a communication interface 208. It may be noted that, in some embodiments, the apparatus 104 may include more or fewer components than those depicted herein. The various components of the apparatus 104 may be implemented using hardware, software, firmware, or any combinations thereof. Further, the various components of the apparatus 104 may be operably coupled with each other. More specifically, various components of the apparatus 104 may be capable of communicating with each other using communication channel media (such as buses, interconnects, etc.).

In one embodiment, the processor 202 may be embodied as a multi-core processor, a single core processor, or a combination of one or more multi-core processors and one or more single core processors. For example, the processor 202 may be embodied as one or more of various processing devices, such as a coprocessor, a microprocessor, a controller, a digital signal processor (DSP), a processing circuitry with or without an accompanying DSP, or various other processing devices including, a microcontroller unit (MCU), a hardware accelerator, a special-purpose computer chip, or the like. The processor 202 may include, but not limited to, an evaluation metric module 214.

The evaluation metric module 214 may determine an evaluation metric of a classifier 212 i.e., the evaluation metric module 214 measures the accuracy of the classifier 212 in classifying the data. The evaluation metric is one of: an accuracy, a precision, a confusion matrix, a detection rate, a logarithmic loss, a sensitivity, a specificity, a recall, a F1 score and the like.

In one embodiment, the memory 204 is capable of storing machine executable instructions 205, referred to herein as instructions 205, a classifier 212 and an AI model 216. The classifier 212 classifies the data of the electromechanical device as healthy and/or unhealthy. The data may be received from a database 210 or from the electromechanical device. In an embodiment, the AI model 216 is trained using domain knowledge to determine a hypothesis for estimating the second timestamp. In another embodiment, a subject expert may determine the hypothesis. In yet another embodiment, a rule-based model may be used to determine the hypothesis. A person skilled in the art will appreciate that any other methods may be used to determine the hypothesis. In an embodiment, the processor 202 is embodied as an executor of software instructions. As such, the processor 202 is capable of executing the instructions 205 stored in the memory 204 to perform one or more operations described herein.

The term "AI model(s)" used herein refers to a model that has been trained on a set of data to recognize certain patterns and/or make certain decisions without further human intervention. AI models apply different algorithms to relevant data inputs to achieve the tasks and/or output they have been trained for. The "AI model(s)" may be a continuous learning model in some embodiments. In an embodiment, the AI model is trained based on domain knowledge.

The memory 204 can be any type of storage accessible to the processor 202 to perform respective functionalities. For example, the memory 204 may include one or more volatile or non-volatile memories, or a combination thereof. For example, the memory 204 may be embodied as semiconductor memory, such as flash memory, mask ROM, PROM (programmable ROM), EPROM (erasable PROM), RAM (random access memory), etc. and the like.

In an embodiment, the processor 202 is configured to execute the instructions 205 for: (1) obtaining a fault reporting event present in data associated with the electromechanical device, wherein the fault reporting event comprise a first timestamp associated with a fault of the electromechanical device, (2) estimating a second timestamp prior to the first timestamp based on domain knowledge associated with the electromechanical device, wherein the data in a time window formed between the first timestamp and the second timestamp are labeled as unhealthy, (3) iteratively increasing a size of the time window by updating the second timestamp and selecting the data in the time window for labeling, (4) determining the evaluation metric of the classifier 212 in classifying the data as unhealthy and healthy for each iteration, (5) determining a value of the second timestamp associated with an optimal evaluation metric, wherein the optimal evaluation metric is determined by comparing the evaluation metric in a current iteration with an evaluation metric in the previous iteration, and (6) labeling the data in the time window formed between the first timestamp and updated second timestamp as unhealthy data.

In an embodiment, the I/O module 206 may include mechanisms configured to receive inputs from and provide outputs to an operator of the apparatus 104 (not shown in FIGS). The term 'operator of the apparatus 104' as used herein may refer to one or more individuals whether directly or indirectly, associated with managing the apparatus 104. In an embodiment, the output may be provided to the fault prediction model. To enable reception of inputs and provide outputs to the apparatus 104, the I/O module 206 may include at least one input interface and at least one output interface. In an example, the operator of the apparatus 104 may configure the apparatus 104 via the at least one input interface. Examples of the input interface may include, but are not limited to, a keyboard, a mouse, a joystick, a keypad, a touch screen, soft keys, a microphone. Examples of the output interface may include, but are not limited to, a display such as a light emitting diode display, a thin-film transistor (TFT) display, a liquid crystal display, an active-matrix organic light-emitting diode (AMOLED) display, a microphone, a speaker, a ringer, and the like.

In an embodiment, the communication interface 208 may include mechanisms configured to communicate with other entities in the environment 100, for example, the one or more sources 102. In an embodiment, the communication interface 208 of the apparatus 104 receives the data (i.e., the fault reporting event present in data associated with the electromechanical device) from the one or more sources 102 and sends the labeled data in response, for example, to the operator.

The apparatus 104 is depicted to be in operative communication with the database 210. In one embodiment, the database 210 is configured to store data associated with an electromechanical device. In an embodiment, the database 210 is configured to store a variety of classifiers based on different specifications. The variety of classifiers may include, but are not limited to a decision tree, a naive bayes classifier, a random forest, a xgboost, a k-nearest neighbors, a support vector machine, an artificial neural network.

The database 210 may include multiple storage units such as hard disks and/or solid-state disks in a redundant array of inexpensive disks (RAID) configuration. In some embodiments, the database 210 may include a storage area network (SAN) and/or a network attached storage (NAS) system. In one embodiment, the database 210 may correspond to a distributed storage system, wherein individual databases are configured to store information.

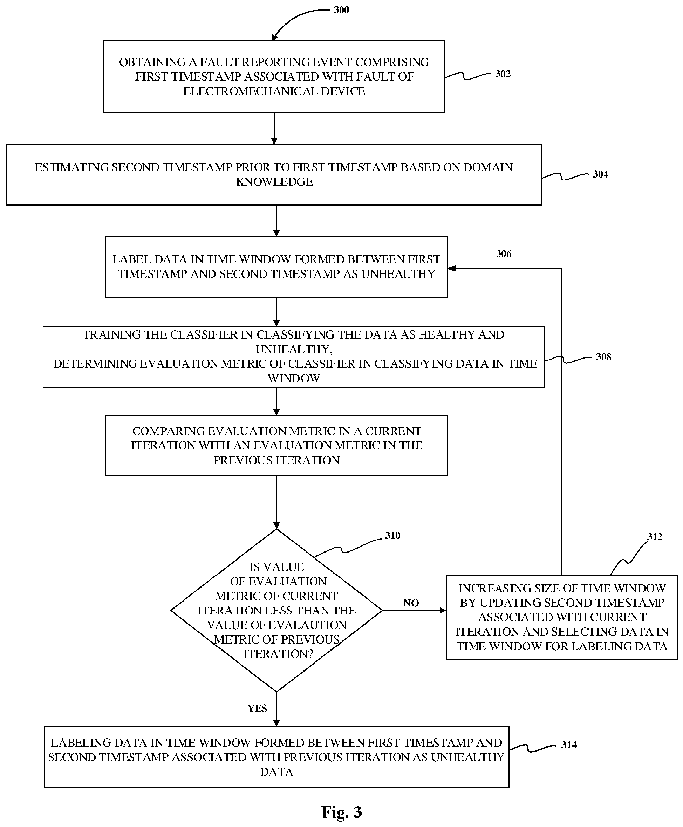

FIG. 3. illustrates a flow chart of a method 300 for labeling data of electromechanical devices.

At 302, a fault reporting event present in data associated with the electromechanical device is obtained by the processor 202 from the one or more sources 102. The fault reporting event comprises a first timestamp associated with the fault of the electromechanical device. For example, consider the fault occurred on 14 March 2024. In an embodiment, the fault may be reported at the end of the day for example, at 2359 hours (hrs). In another embodiment, the fault may be reported at the beginning of the day for example at 0001 hrs. The first timestamp may comprises information related to the date (i.e., 14 March 2024). In an embodiment, the first timestamp may comprises information related to the date and the time (i.e., 2200 hrs.). In an embodiment, the actual fault event may have occurred prior to the first timestamp. For example, the fault may have occurred at 1600 hrs but the fault reporting event is reported at 2359 hrs. In another embodiment, the fault may have occurred at 1600 hrs on 14 March 2024 however, the fault maybe reported on 15 March 2024 at 0001 hrs. Therefore, the data of the entire day is considered as faulty, which leads to inaccuracy in labeling the data.

The first timestamp may comprise information related to at least one of: date, hours, minutes, and seconds associated with the fault reporting event.

At 304, a second timestamp prior to the first timestamp is estimated by the processor 202 based on domain knowledge. The second timestamp may be estimated by, but not limited to, a subject matter expert, an AI model, and a rule-based model. In an embodiment, the hypothesis is determined to estimate the second timestamp. The hypothesis is made that the beginning of the fault occurs prior to the fault reporting event by a predefined value based on the domain knowledge. For example, consider the electromechanical device is a motor and the first timestamp is 14 March 2024. The second timestamp may be considered before 1 week from the first timestamp i.e., the hypothesis is made that the beginning of the fault is 1 week prior to the fault reporting event. In another example, consider the electromechanical device is a drive and the first timestamp is 14 March 2024. The second timestamp may be considered before 10days from the first timestamp. In an example, the subject matter expert may determine that there is a drop in speed of the motor which is associated with a leakage in rotor circuit due to broken bars for a prolonged period of time. Hence, the fault may have occurred when the leakage started. In such case, the second timestamp may be considered before 1 week from the first timestamp, based on the domain knowledge of motors.

At 306, the data between a time window formed between the first timestamp and the second timestamp is labeled as unhealthy by the processor 202.

At 308, the evaluation metric of the classifier 212 for labeling the data is determined by the evaluation metric module 214 in the processor 202. The evaluation metric is one of: the accuracy, the precision, the confusion matrix, the detection rate, the logarithmic loss, the sensitivity, the specificity, the recall, the F1 score and the like. For example, if the fault event is reported on 14 March 2024, the occurrence of the fault is on 10 March 2024. However, the second timestamp may be selected as 12 March 2024. The evaluation metric of the classifier 212 may be 95% as the data on 9 March 2024 is healthy but is mislabeled as unhealthy. The classifier 212 is trained to classify the data as healthy and unhealthy. The evaluation metric of the classifier 212 is said to be optimal when the hypothesis made initially is accurate. However, when the evaluation metric is not the optimal evaluation metric, the time window is increased iteratively. The evaluation metric is monitored for each iteration, to determine the second timestamp associated with an optimal evaluation metric. The steps to determine the optimal evaluation metric are explained in steps 310-314.

At 310, the processor 202 determines whether the evaluation metric of the current iteration is less than the evaluation metric of the previous iteration. In an example, consider the fault event is reported on 14 March 2024, and the occurrence of the fault is on 10 March 2024. However, the second timestamp is selected as 12 March 2024 based on the domain knowledge. The evaluation metric of the classifier 212 may be 95% as the data on 10 March 2024 is unhealthy but is mislabeled as healthy. In a first iteration, the time window may be increased by 1 day. The evaluation metric for the current iteration may be 97% and the second timestamp may be estimated as 11 March 2024. Consider the evaluation metric in a second iteration as 98% and a third iteration as 97%. The value of the evaluation metric decreases in the third iteration when compared with the second iteration. In an embodiment, the evaluation metric of the second iteration may be considered as the optimal evaluation metric. In another embodiment, the size of the time window is iteratively increased for a first predefined value. For example, consider the first predefined value as three, i.e., the time window is increased for three iterations and the second timestamp associated with the evaluation metric at the end of the three iterations is considered. The size of the time window is iteratively increased for the first predefined value even when the evaluation metric decreases, to eliminate incorrect estimation due to noise in the data.

At 312, when the evaluation metric of the current iteration is not less than the evaluation metric of the previous iteration, the processor 202 increases the time window between the first timestamp and the second timestamp i.e., the processor 202 estimates another second timestamp. In an embodiment, the processor 202 iteratively increases the time window by the predefined value. For example, consider a first time window is 2 days, and the time window is increased by one day. The new time window is 3 days i.e., the second timestamp is 11 March 2024. In an embodiment, the time window may be increased by one of: weeks, days, hours, minutes, and seconds. In an embodiment, the evaluation metric may be based on adversarial validation but is not limited thereto. Table. 1 is an exemplary table comprising the evaluation metric corresponding to the second timestamp, considering the first timestamp as 14 March 2024.

| Hypothesis | Second Timestamp | Evaluation metric |
|---|---|---|
| Fault can be detected 2 days before the fault reporting event | 12 March 2024 | 95% |
| Fault can be detected 3 days before the fault reporting event | 11 March 2024 | 98% |
| Fault can be detected 4 days before the fault reporting event | 10 March 2024 | 95% |
| Fault can be detected 5 days before the fault reporting event | 9 March 2024 | 87% |

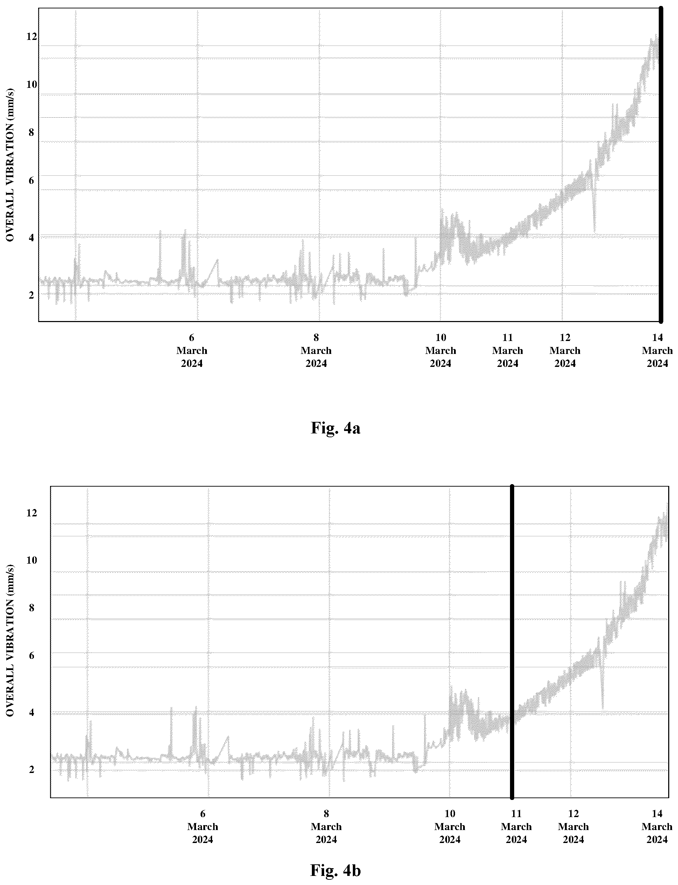

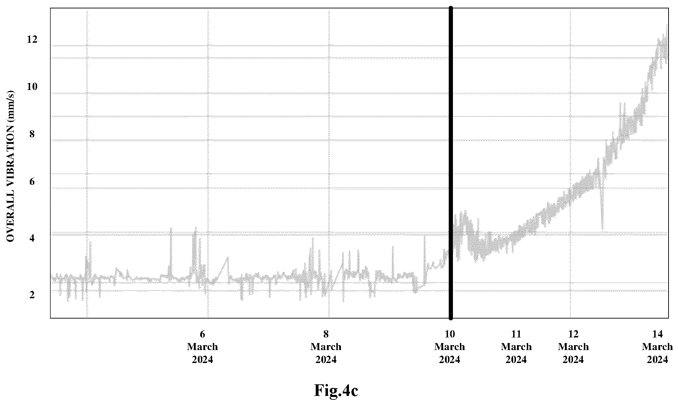

At 314, the data between the first timestamp and the second timestamp is labeled as unhealthy. The labeled data may be provided to the fault prediction model for training the model. Determining the time window is explained in detail with respect to Fig. 4.

Now referring to Fig. 4a-4c which shows exemplary illustrations of labeling data at different time windows. Fig. 4a illustrates an embodiment wherein only the data on the first time stamp is labeled as unhealthy, and rest of the data is labeled as healthy. For example, consider the first timestamp indicates 14 March 2024, the data on 14 March 2024 is labeled as unhealthy. However, the occurrence of the fault may be on 10 March 2024. Therefore, the evaluation metric of the classifier is 92%. Therefore, the time window needs to be increased. The first timestamp may comprise information related to at least one of: date, hours, minutes, and seconds associated with the fault reporting event.

Fig. 4b shows an illustration wherein the second timestamp is estimated, and the data between the first time stamp and the second timestamp is labeled as unhealthy, and rest of the data is labeled as healthy. In this example, the second timestamp is estimated as 11 March 2024. However, the occurrence of the fault is on 10 March 2024. The data between the first timestamp and the second timestamp is labeled as unhealthy and the rest of the data is labeled as healthy. However, since the occurrence of the fault is on 10 March 2024, the data on 10 March 2024 is mislabeled as healthy. Therefore, the evaluation metric of the classifier 212 is 95% which is not the optimal evaluation metric (from table. 1). Therefore, the time window needs to be increased until the evaluation metric is maximum, for example, 11 March 2024 (from Table. 1).

Fig. 4c shows an illustration wherein an optimal second timestamp is estimated, and the data between the first time stamp and the second timestamp is labeled as unhealthy, and rest of the data is labeled as healthy. In this example, the second timestamp is estimated as 10 March 2024 and the occurrence of the fault is 10 March 2024. The data between the first timestamp and the second timestamp is labeled as unhealthy and the rest of the data is labeled as healthy. In this example, the evaluation metric of the classifier 212 is 98% which is the maximum value of the evaluation metric i.e., the optimal evaluation metric. Therefore, the second timestamp is optimal, and the data is labeled accurately.

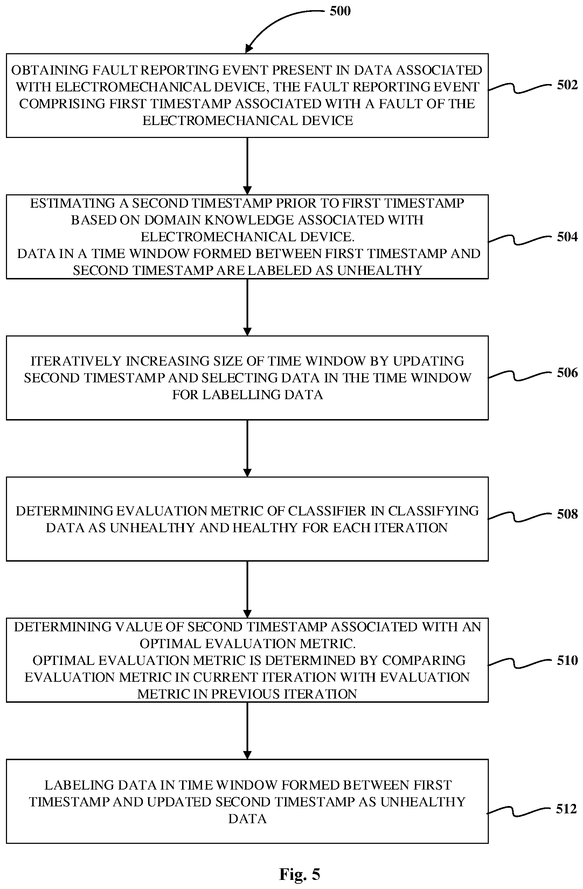

Fig. 5 illustrates a method 500 for labeling data of electromechanical devices, in accordance with an embodiment of the present disclosure.

At 502, the processor 202 obtains a fault reporting event present in data associated with an electromechanical device. The fault reporting event comprises the first timestamp associated with a fault of the electromechanical device. In an example, the fault reporting event is the reporting of the fault event by a consumer. The first timestamp may comprise information related to at least one of: date, hours, minutes, and seconds associated with the fault reporting event.

At 504, the processor 202 estimates the second timestamp prior to the first timestamp based on domain knowledge associated with the electromechanical device. The data in a time window formed between the first timestamp and the second timestamp are labeled as unhealthy. For example, if the electromechanical device is a motor and the first timestamp indicates 14 March 2024 at 2359hrs, the second timestamp may be considered before 1 week. In another example, if the electromechanical device is a drive and the first timestamp is 14 March 2024, the second timestamp may be considered before 10 hrs.

At 506, the processor 202 iteratively increases a size of the time window by updating the second timestamp and selecting the data in the time window for labeling the data. In an embodiment, the size of the time window may be increased by a predefined value based on the domain knowledge. For example, if the electromechanical device is a motor, the time window may be increased at an interval of 1 week. In another example, if the electromechanical device is the driver, the time window may be increased at an interval of 10 hours.

At 508, the processor 202 determines the evaluation metric of the classifier 212 in classifying the data as unhealthy and healthy for each iteration. The time window is increased iteratively, and the evaluation metric is monitored for each iteration, to determine the second timestamp associated with an optimal evaluation metric. In an embodiment, the size of the time window is iteratively increased for the second predefined value. The second timestamp associated with a maximum value of evaluation metric from the second predefined value of iterations is selected as the optimal evaluation metric i.e., the optimal evaluation metric is the evaluation metric achieved at the end of the second predefined value of iteration. For example, the second predefined value may be the number of iterations defined by a user. In another embodiment, the evaluation metric of each iteration is compared with the respective previous iteration until the evaluation metric of the current iteration is less than the evaluation metric of the previous iteration. The time window is further increased for the first predefined value to obtain the optimal evaluation metric. The evaluation metric is one of: the accuracy, the precision, the confusion matrix, the detection rate, the logarithmic loss, the sensitivity, the specificity, the recall, the F1 score and the like.

At 510, the processor 202 determines the value of the second timestamp associated with an optimal evaluation metric. The optimal evaluation metric is determined by comparing the evaluation metric in a current iteration with an evaluation metric in the previous iteration. For example, consider the fault event is reported on 14 March 2024, and the occurrence of the fault is on 10 March 2024. However, the second timestamp is selected as 12 March 2024 based on the domain knowledge. The evaluation metric of the classifier 212 may be 95% as the data on 10 March 2024 is unhealthy but is mislabeled as healthy. In the first iteration, the time window is increased by 1 day, the evaluation metric for the current iteration may be 97% and the second timestamp is 11 March 2024. Consider the evaluation metric in second iteration as 98% and third iteration as 97%. The value of the evaluation metric decreases in the third iteration when compared with the second iteration. In an embodiment, the evaluation metric of the second iteration may be considered as the optimal evaluation metric. In another embodiment, the size of the time window is iteratively increased for the first predefined value. For example, consider the first predefined value as three, i.e., the time window is increased for three iterations and the second timestamp associated with the evaluation metric at the end of the three iterations is considered i.e., the second timestamp associated with the evaluation metric of the current iteration is selected.

At 512, the processor 202 labels the data in the time window formed between the first timestamp and updated second timestamp as unhealthy data using the classifier 212. During training of the classifier, training data is provided to the classifier 212. The training data is provided with labels as healthy data and unhealthy data. The classifier 212 selects the training data in the time window and classifies the training data as healthy and unhealthy based on the labels. The data outside the time window is labeled as healthy.

The disclosed method 500 with reference to Fig. 5, may be implemented using software including computer-executable instructions stored on one or more computer-readable media (e.g., non-transitory computer-readable media, such as one or more optical media discs, volatile memory components (e.g., DRAM or SRAM), or non-volatile memory or storage components (e.g., hard drives or solid-state non-volatile memory components, such as Flash memory components) and executed on a computer (e.g., any suitable computer, such as a laptop computer, net book, Web book, tablet computing device, smart phone, or other mobile computing device). Such software may be executed, for example, on a single local computer.

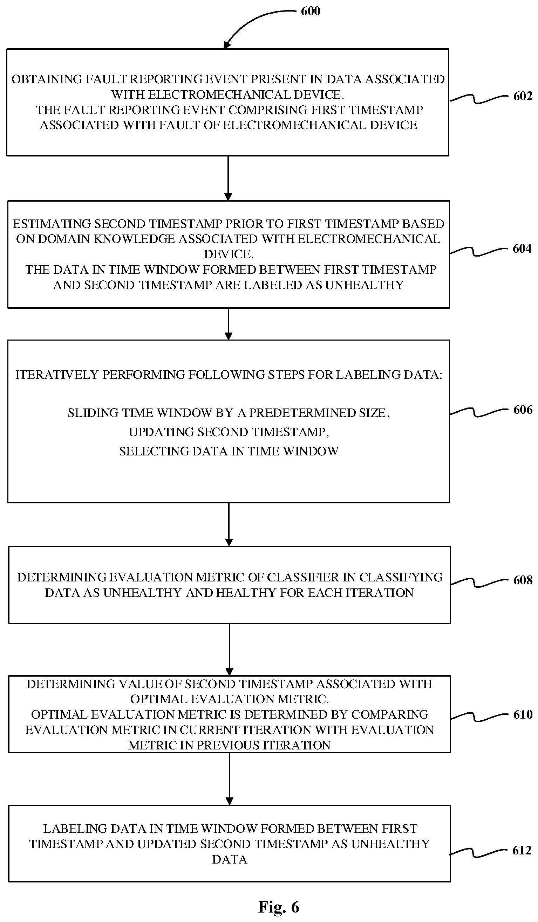

Fig. 6 illustrates a method 600 for labeling data of electromechanical devices, in accordance with an embodiment of the present disclosure.

At 602, the processor 202 obtains a fault reporting event present in data associated with an electromechanical device, wherein the fault reporting event comprising the first timestamp associated with a fault of the electromechanical device. In an example, the fault reporting event is the reporting of the fault event by an operator. In another example, consider the fault event to be a failure of a motor occurs on 14 March 2024 at 1600 hrs. The fault event is reported on 14 March 2024 at 2200 hrs. The fault reporting event comprise data indicating the first timestamp i.e., 14 March 2024 and 2200 hrs. In another example, consider the fault event to be a failure of a motor occurs on 14 March 2024. The fault event is reported on 15 March 2024 at 0001 hrs. The fault reporting event comprise data indicating the first timestamp i.e., 15 March 2024. The first timestamp may comprise information related to at least one of: date, hours, minutes, and seconds associated with the fault reporting event.

At 604, the processor 202 estimates the second timestamp prior to the first timestamp based on domain knowledge associated with the electromechanical device. The data in a time window formed between the first timestamp and the second timestamp are labeled as unhealthy. For example, if the electromechanical device is a motor and the first timestamp indicates 14 March 2024, the second timestamp may be considered before 1 week. In another example, if the electromechanical device is a drive and the first timestamp is 14 March 2024, the second timestamp may be considered before 10 hrs.

At 606, the processor 202 iteratively slides the time window by a predetermined size. The predetermined size is based on domain knowledge. For example, consider the electromechanical device is a motor, predetermined size maybe 1 week. In another example, consider the electromechanical device is the driver, the predetermined size maybe 10 hours. The second timestamp is updated for each iteration. The data in the time window is selected for labeling.

At 608, the processor 202 determines the evaluation metric of the classifier 212 in classifying the data as unhealthy and healthy for each iteration. The time window is slid iteratively, and the evaluation metric is monitored for each iteration, to determine the second timestamp associated with an optimal evaluation metric. In an embodiment, the optimal evaluation metric is the evaluation metric achieved at the end of the second predefined value of iteration. In another embodiment, the evaluation metric of each iteration with the respective previous iteration until the evaluation metric of the current iteration is less than the evaluation metric of the previous iteration. The time window is further slid for the first predefined value to obtain the optimal evaluation metric. The evaluation metric is one of: the accuracy, the precision, the confusion matrix, the detection rate, the logarithmic loss, the sensitivity, the specificity, the recall, the F1 score and the like.

At 610, the processor 202 determines the value of the second timestamp associated with an optimal evaluation metric. The optimal evaluation metric is determined by comparing the evaluation metric in a current iteration with an evaluation metric in the previous iteration.

At 612, the processor 202 labels the data in the time window as unhealthy data using the classifier 212.

The disclosed method 600 with reference to Fig. 6, may be implemented using software including computer-executable instructions stored on one or more computer-readable media (e.g., non-transitory computer-readable media, such as one or more optical media discs, volatile memory components (e.g., DRAM or SRAM), or non-volatile memory or storage components (e.g., hard drives or solid-state non-volatile memory components, such as Flash memory components) and executed on a computer (e.g., any suitable computer, such as a laptop computer, net book, Web book, tablet computing device, smart phone, or other mobile computing device). Such software may be executed, for example, on a single local computer.

In an embodiment, there may be an error in considering the first timestamp i.e., there may be a delay in reporting the fault. For example, consider the fault occurred on 14 March 2024, the fault reporting event i.e., the fault may be reported at the end of the day for example, on 14 March 2024 at 2359 hrs. The first timestamp comprises information related to the date (i.e., 14 March 2024). In another embodiment, the first timestamp may comprise information related to the date and the time (i.e., 2359 hrs.). The first timestamp may comprise information related to at least one of: date, hours, minutes, and seconds associated with the fault reporting event. In an embodiment, the actual fault event may have occurred prior to the first timestamp. For example, the fault may have occurred at 1600 hrs but the fault reporting event is considered at the end of the day i.e., at 2200 hrs. In another example, the fault may have occurred at 1600 hrs but the fault reporting event is considered at the beginning of the next day i.e., at 0001 hrs on 15 March 2024. Therefore, the first timestamp is not optimal. In an embodiment, to determine optimal first timestamp, the second timestamp associated with the optimal evaluation metric is retained as constant and the first timestamp is updated. In this embodiment, the window size is increased iteratively by a predefined value based on domain knowledge. The evaluation metric is monitored for each iteration, to determine the optimal first timestamp associated with an optimal evaluation metric. In an embodiment, the optimal evaluation metric is the evaluation metric achieved at the end of the fourth predefined value of iteration. In another embodiment, the evaluation metric of each iteration with the respective previous iteration until the evaluation metric of the current iteration is less than the evaluation metric of the previous iteration. The time window is further increased for the third predefined value to obtain the optimal evaluation metric. In this embodiment, consider the evaluation metric is decreasing for each iteration, when the time window increased for the third predefined value. In this embodiment, the first timestamp associated with the evaluation metric of the previous iteration is considered as the optimal first timestamp. The evaluation metric is one of: the accuracy, the precision, the confusion matrix, the detection rate, the logarithmic loss, the sensitivity, the specificity, the recall, the F1 score and the like.

In another embodiment, the first timestamp may be determined based on domain knowledge. For example, if the electrotechnical device is operated only at a fixed timing consider between 1500-1700 hrs, the fault event would have occurred between 1500-1700 hrs. The second timestamp determined i.e., the second timestamp associated with the optimal evaluation metric based on domain knowledge and is retained as constant while the first timestamp is updated. In this embodiment, the window size is increased iteratively by a predefined value within the window of 1500-1700 hrs. The iteration with the maximum evaluation metric is considered as optimal and the first time stamp associated with the optimal evaluation metric is considered as the optimal first timestamp. The predefined value to determine the first timestamp is less than that of the second timestamp.

In an embodiment, a method for determining fault occurring event. The method includes obtaining, by a processor, a fault reporting event present in data associated with an electromechanical device. The fault reporting event comprises a first timestamp associated with a fault of the electromechanical device. The method includes estimating, by the processor, a second timestamp prior to the first timestamp based on domain knowledge associated with the electromechanical device. The data in a time window formed between the first timestamp and the second timestamp are labeled as unhealthy. The method includes iteratively increasing, by the processor, a size of the time window by updating the first timestamp and selecting the data in the time window for labeling the data. The method includes determining, by the processor, an evaluation metric of the classifier in classifying the data as unhealthy and healthy for each iteration. The method includes determining, by the processor, a value of the first timestamp associated with an optimal evaluation metric. The optimal evaluation metric is determined by comparing the evaluation metric in a current iteration with an evaluation metric in the previous iteration. The method includes labeling, by the processor, the data in the time window formed between the first timestamp and updated second timestamp as unhealthy data.

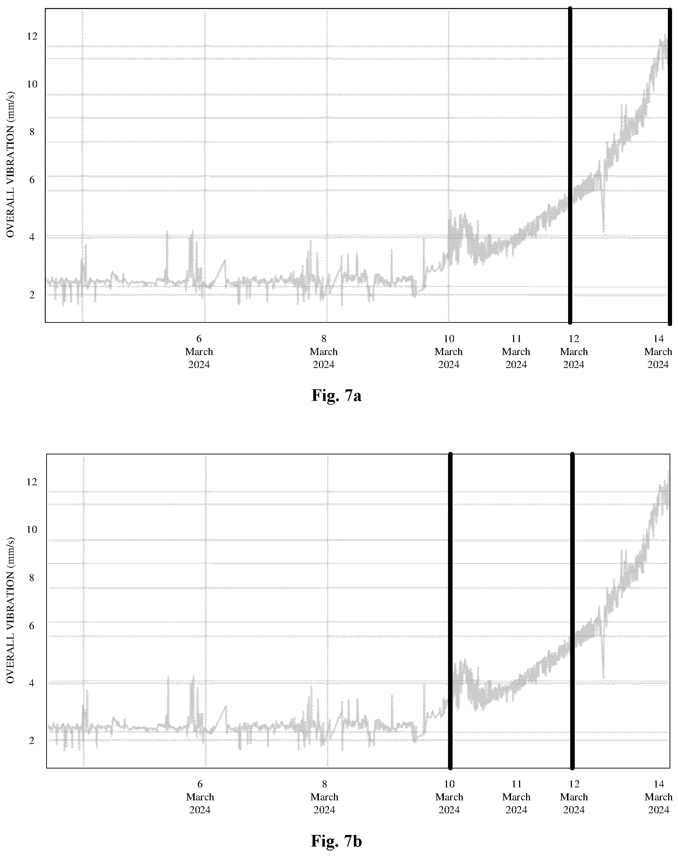

Fig. 7 illustrates selecting the data in the time window, in accordance with an embodiment of the present disclosure. Fig. 7a is an example of the time window selected between the first timestamp and the second timestamp in one iteration. In Fig. 7b illustrates sliding of the time window. For example, in Fig.7a, the time window is between the first timestamp indicating 14 March 2024 and the second timestamp indicating 12 March 2024. The data in the time window i.e., between 14 March 2024 and 12 March 2024 is labeled as unhealthy. In Fig.7b, sliding the time window by the predefined size is illustrated. In Fig. 7b, only the window is slid and the first timestamp is not changed. In Fig. 7a, the one end of the window coincides with the first timestamp. Consider the predefined size as 2 days and., the data in the time window is selected i.e., between12 March 2024 and the second timestamp indicating 10 March 2024. The data between 12 March 2024 and 10 March 2024 is labelled as unhealthy. The evaluation metric of the classifier in classifying the data is determined. In the next iteration, the time window is sild by two days i.e., between 10 March 2024 and 8 March 2024. The data in the time window is labeled and the evaluation metric is determined. Consider the evaluation metric is less than the evaluation metric of the previous iteration, then the second timestamp is considered as 10 March 2024. The data between the first timestamp i.e., 14 March 2024 and the second timestamp 10 March 2024 is labeled as unhealthy. In the example given in Fig. 7b, for each iteration the data within the window is labeled. Since the window does not overlap with previous iteration data, the data outside the sliding window in the previous iteration remains unchanged. For example, in the first iteration the data between 14 March 2024 and 12 March 2024 may be labeled as unhealthy. In the second iteration the data between 12 March 2024 and 10 March 2024 may be labeled as unhealthy. In the third iteration the data between 8 March 2024 and 10 March 2024 may be labeled as healthy. Hence, the overall unhealthy data may be between 10 March 2024 to 14 March 2024. And data before 8 March 2024 may be healthy.

In an embodiment, the classifier 212 and the AI model 216 are trained on asset specific data. For example, the data and domain knowledge associated with a motor, a drive, and the like. In another embodiment, the classifier 212 and the AI model 216 are trained on generic data such as, but not limited to, asset family, asset application, product subtype.

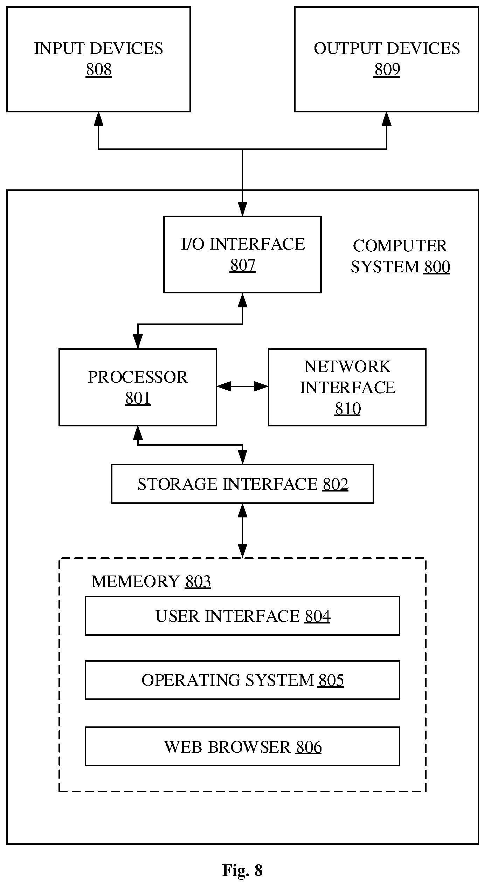

Fig. 8 illustrates a block diagram of an exemplary computer system 800, for implementing embodiments consistent with the present disclosure. The computer system 800 may be, without limitation to, the apparatus 104. The computer system 800 may include a central processing unit ("CPU" or "processor") 801. The processor 801 may include at least one data processor for executing processes. The processor 801 may include specialized processing units such as, integrated system (bus) controllers, memory management control units, floating point units, graphics processing units, digital signal processing units, etc.

The processor 801 may be disposed in communication with one or more input/output (I/O) devices 808 and 809 via I/O interface 807. The I/O interface 807 may employ communication protocols/methods such as, without limitation, audio, analog, digital, monaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 807, the computer system 800 may communicate with one or more I/O devices 808 and 809. For example, the input devices 808 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output devices 809 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the processor 801 may be disposed in communication with external elements such as external computer systems, servers, network elements. The network interface 810 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc.

In some embodiments, the processor 801 may be disposed in communication with a memory 803 (e.g., RAM, ROM, etc.) via a storage interface 802. The storage interface 802 may connect to memory 803 including, without limitation, memory drives, removable disc drives, etc., employing connection protocols such as, serial advanced technology attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 803 may store a collection of program or database components, including, without limitation, user interface 804, an operating system 805, a web browser 806 etc. In some embodiments, computer system 800 may store user/application data, such as, the data, variables, records, etc., as described in this disclosure. Such databases may be implemented as fault-tolerant, relational, scalable, secure databases such as Oracle ^{®} or Sybase^{®}.

The operating system 805 may facilitate resource management and operation of the computer system 800. Examples of operating systems include, without limitation, APPLE MACINTOSH^{®} OS X, UNIX^{®}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{®} IOS^{™}, GOOGLE^{®} ANDROID^{™}, BLACKBERRY^{®} OS, or the like.

In some embodiments, the computer system 800 may implement the web browser 806 stored program components. The web browser 806 may be a hypertext viewing application, such as MICROSOFT^{®} INTERNET EXPLORER^{®}, GOOGLE^{™} CHROME^{™} MOZILLA^{®} FIREFOX^{®}, APPLE^{®} SAFARI^{®}, etc. Secure web browsing may be provided using Secure Hypertext Transport Protocol (HTTPS), Secure Sockets Layer (SSL), Transport Layer Security (TLS), etc. Web browsers 806 may utilize facilities such as AJAX, DHTML, ADOBE^{®} FLASH^{®}, JAVASCRIPT^{®}, JAVA^{®}, Application Programming Interfaces (APIs), etc. In some embodiments, the computer system 800 may implement a mail server stored program component. The mail server may be an Internet mail server such as Microsoft Exchange, or the like. The mail server may utilize facilities such as Active Server Pages (ASP), ACTIVEX^{®}, ANSI^{®} C++/C#, MICROSOFT^{®}, .NET, CGI SCRIPTS, JAVA^{®}, JAVASCRIPT^{®}, PERL^{®}, PHP, PYTHON^{®}, WEBOBJECTS^{®}, etc. The mail server may utilize communication protocols such as Internet Message Access Protocol (IMAP), Messaging Application Programming Interface (MAPI), MICROSOFT^{®} exchange, Post Office Protocol (POP), Simple Mail Transfer Protocol (SMTP), or the like. In some embodiments, the computer system 800 may implement a mail client stored program component. The mail client may be a mail viewing application, such as APPLE^{®} MAIL, MICROSOFT^{®} ENTOURAGE^{®}, MICROSOFT^{®} OUTLOOK^{®}, MOZILLA^{®} THUNDERBIRD^{®}, etc.

The present disclosure provides a method and apparatus for labeling data of electromechanical devices. The present disclosure enables labeling of data by predicting the earliest occurrence of a fault in the electromechanical device. This minimizes mislabeling, thereby increasing the efficiency of the classifier and accuracy in classification. The present disclosure enables a balance between the number of data samples for faulty and healthy classes which results in accuracy improvement of the classifier. Thereby, the present disclosure enables reduced downtime of the electromechanical device.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may include media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media may include all computer-readable media except for a transitory. The code implementing the described operations may further be implemented in hardware logic (e.g., an integrated circuit chip, Programmable Gate Array (PGA), Application Specific Integrated Circuit (ASIC), etc.).

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer readable storage medium refers to any type of physical memory on which information or data readable by a processor may be stored. Thus, a computer readable storage medium may store instructions for execution by one or more processors, including instructions for causing the processor(s) to perform steps or stages consistent with the embodiments described herein. The term "computer readable medium" should be understood to include tangible items and exclude carrier waves and transient signals, i.e., are non-transitory. Examples include random access memory (RAM), read-only memory (ROM), volatile memory, non-volatile memory, hard drives, CD ROMs, DVDs, flash drives, disks, and any other known physical storage media.

Aspects might be directed to typical methods as described herein, wherein determining the value of the second timestamp comprising: comparing the evaluation metric of each iteration with the respective previous iteration until the evaluation metric of the current iteration is less than the evaluation metric of the previous iteration; iteratively sliding the time window for a first predefined value; selecting the second timestamp associated with the evaluation metric of current iteration.

Aspects might be directed to typical methods as described herein, wherein determining the value of the second timestamp comprising: iteratively sliding the time window for a second predefined value; and selecting the second timestamp associated with a maximum value of evaluation metric.

Aspects might be directed to typical methods as described herein, wherein the predetermined size is based on domain knowledge.

Finally, the language used in the specification has been principally selected for readability and instructional purposes, and it may not have been selected to delineate or circumscribe the inventive subject matter. Accordingly, the disclosure of the embodiments of the disclosure is intended to be illustrative, but not limiting, of the scope of the disclosure.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

| Referral Number | Description |
|---|---|
| 102 | One or more sources |
| 104 | Apparatus |
| 106 | Communication network |
| 202 | Processor |
| 204 | Memory |
| 205 | Instructions |
| 208 | Communication interface |
| 206 | Input/Output module |
| 210 | Database |
| 212 | Classifier |
| 214 | Evaluation metric module |
| 216 | AI model |
| 800 | Computer System |
| 801 | Processor |
| 802 | Storage Interface |
| 803 | Memory |
| 804 | User interface |
| 805 | Operating system |
| 806 | Web browser |
| 807 | I/O interface |
| 808 | Input devices |
| 809 | Output devices |

## Claims

1. A method for labeling data of electromechanical devices:
obtaining, by a processor (202), a fault reporting event present in data associated with an electromechanical device, wherein the fault reporting event comprising a first timestamp associated with a fault of the electromechanical device;
estimating, by the processor (202), a second timestamp prior to the first timestamp based on domain knowledge associated with the electromechanical device, wherein the data in a time window formed between the first timestamp and the second timestamp are labeled as unhealthy;
iteratively increasing, by the processor (202), a size of the time window by updating the second timestamp and selecting the data in the time window for labeling the data;
determining, by the processor (202), an evaluation metric of a classifier (212) in classifying the data as unhealthy and healthy for each iteration;
determining, by the processor (202), a value of the second timestamp associated with an optimal evaluation metric, wherein the optimal evaluation metric is determined by comparing the evaluation metric in a current iteration with an evaluation metric in the previous iteration; and
labeling, by the processor (202), the data in the time window formed between the first timestamp and updated second timestamp as unhealthy data.

2. The method as claimed in claim 1, wherein determining the value of the second timestamp comprising:
comparing the evaluation metric of each iteration with the respective previous iteration until the evaluation metric of the current iteration is less than the evaluation metric of the previous iteration; and
iteratively increasing the size of the time window for a first predefined value; and
selecting the second timestamp associated with the evaluation metric of current iteration.

3. The method as claimed in claim 1 or 2, wherein determining the value of the second timestamp comprising:
iteratively increasing the size of the time window for a second predefined value; and
selecting the second timestamp associated with a maximum value of evaluation metric.

4. The method as claimed in any of the preceding claims, wherein the labeling comprises:
providing, by the processor (202), training data to the classifier (212), wherein the training data is provided with labels as healthy data and unhealthy data;
selecting, by the processor (202), the training data in the time window; and
classifying, by the processor (202), the training data as healthy and unhealthy based on the labels.

5. The method as claimed in any of the preceding claims, further comprising:
labeling, by the processor (202), data outside the time window as healthy data.

6. The method as claimed in any of the preceding claims, wherein iteratively increasing the size of the time window comprising:
increasing, by the processor (202), the size by a predefined value based on the domain knowledge.

7. The method as claimed in any of the preceding claims, wherein the evaluation metric is one of: an accuracy, a precision, a confusion matrix, a detection rate, a logarithmic loss, a sensitivity, a specificity, a recall and a F1 score.

8. An apparatus (104) for labeling data of electromechanical devices comprises:
a processor (202); and
a memory, wherein the memory stores processor-executable instructions, which, on execution, cause the processor (202) to:
obtain a fault reporting event in data associated with an electromechanical device, wherein the fault reporting event comprising a first timestamp associated with a fault of the electromechanical device;
estimate a second timestamp prior to the first timestamp based on domain knowledge associated with the electromechanical device, wherein the data in a time window formed between the first timestamp and the second timestamp are labeled as unhealthy;
iteratively increase a size of the time window by updating the second timestamp and selecting the data in the time window for labeling the data;
determine an evaluation metric of a classifier (212) in classifying the data as unhealthy and healthy for each iteration;
determine a value of the second timestamp associated with an optimal evaluation metric, wherein the optimal evaluation metric is determined by comparing the evaluation metric in a current iteration with an evaluation metric in the previous iteration; and
label the data in the time window formed between the first timestamp and updated second timestamp as unhealthy data.

9. The apparatus (104) as claimed in claim 8, wherein, the processor is configured to determine the value of the second timestamp by:
comparing the evaluation metric of each iteration with the respective previous iteration until the evaluation metric of the current iteration is less than the evaluation metric of the previous iteration;
iteratively increasing the size of the time window for a first predefined value; and
selecting the second timestamp associated with the evaluation metric of current iteration.

10. The apparatus (104) as claimed in claim 8 or 9, wherein, the processor is configured to determine the value of the second timestamp by:
iteratively increasing the size of the time window for a second predefined value; and
selecting the second timestamp associated with a maximum value of evaluation metric.

11. The apparatus (104) as claimed in claim 8, 9 or 10, wherein for labeling the data the processor (202) is configured to:
provide training data to the classifier (212), wherein the training data is provided with labels as healthy data and unhealthy data;
select the training data in the time window; and
classify the training data as healthy and unhealthy based on the labels.

12. The apparatus (104) as claimed in any of the claims 8 to 11, wherein the processor (202) is further configured to:
label data before the updated second timestamp as healthy data.

13. The apparatus (104) as claimed in any of the claims 8 to 12, wherein for iteratively increasing the size of the time window the processor (202) is configured to:
increase the size by a predefined value based on the domain knowledge.

14. The apparatus (104) claimed in any of the claims 8 to 13, wherein the evaluation metric is one of: an accuracy, a precision, a confusion matrix, a detection rate, a logarithmic loss, a sensitivity, a specificity, a recall and a F1 score.

15. A method for labeling data of electromechanical devices comprising:
obtaining, by a processor (202), a fault reporting event present in data associated with an electromechanical device, wherein the fault reporting event comprising a first timestamp associated with a fault of the electromechanical device;
estimating, by the processor (202), a second timestamp prior to the first timestamp based on domain knowledge associated with the electromechanical device, wherein the data in a time window formed between the first timestamp and the second timestamp are labeled as unhealthy;
iteratively performing the following steps for labeling the data:
sliding, by the processor (202), the time window by a predetermined size;
updating, by the processor (202), the second timestamp; and
selecting, by the processor (202), the data in the time window;
determining, by the processor (202), an evaluation metric of a classifier (212) in classifying the data as unhealthy and healthy for each iteration;
determining, by the processor (202), a value of the second timestamp associated with an optimal evaluation metric, wherein the optimal evaluation metric is determined by comparing the evaluation metric in a current iteration with an evaluation metric in the previous iteration; and
labeling, by the processor (202), the data in the time window formed between the first timestamp and updated second timestamp as unhealthy data.
